# EUROPEAN PATENT SPECIFICATION

(11) **EP 2 939 243 B1**
(45) Date of publication and mention of the grant of the patent: **06.02.2019**
(21) Application number: 13868378.4
(22) Date of filing: 23.12.2013
(51) Int. Cl.: G21C 3/06, G21C 3/07, G21C 3/20, G21C 3/18, G21C 21/02, G21C 21/04, G21C 3/04

(54) **NUCLEAR FUEL ELEMENT**
KERNBRENNSTOFFELEMENT
ÉLÉMENT DE COMBUSTIBLE NUCLÉAIRE

(30) Priority: 28.12.2012 US 201261747073 P; 11.03.2013 US 201313794633
(43) Date of publication of application: 04.11.2015
(73) Proprietor: TerraPower LLC, Bellevue Washington 98008 (US)
(72) Inventor: POVIRK, Gary, Bellevue, Washington 98005 (US); VOLLMER, James, M., Bellevue, Washington 98005 (US); LATTA, Ryan, N., Bellevue, Washington 98005 (US); HELMREICH, Grant, Bellevue, Washington 98005 (US); SCHLOSS, Philip, M., Bellevue, Washington 98005 (US)
(74) Representative: D Young & Co LLP
(86) International application number: PCT/US2013/077448
(87) International publication number: WO 2014/105807

(56) References cited:
- WO-A1-92/02654
- US-A- 2 009 104
- US-A- 3 356 584
- US-A- 4 022 662
- US-A- 4 613 479
- US-A- 4 960 562
- US-A- 5 517 541
- US-A- 5 583 900
- US-A1- 2002 106 048
- US-A1- 2009 035 604

## Description

### BACKGROUND

The present patent application relates to fuel elements and methods related to same.

US 4022662 discloses a nuclear fuel element having a metal liner and a diffusion barrier disposed between the cladding and the nuclear fuel material. US 3356584 discloses ceramic fuel pellets for use in rod-type nuclear reactor fuel elements.

### SUMMARY

Disclosed embodiments include fuel assemblies, and methods of making and using same.

The foregoing is a summary and thus may contain simplifications, generalizations, inclusions, and/or omissions of detail; consequently, those skilled in the art will appreciate that the summary is illustrative only and is not intended to be in any way limiting. In addition to any illustrative aspects, embodiments, and features described herein, further aspects, embodiments, and features will become apparent by reference to the drawings and the following detailed description. Other aspects, features, and advantages of the devices and/or processes and/or other subject matter described will become apparent in the teachings set forth herein.

### BRIEF DESCRIPTION OF THE DRAWINGS

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally similar and/or structurally similar elements).
Figures 1a-1b provide partial-cutaway perspective views in schematic form of an illustrative (a) nuclear fuel assembly and (b) fuel element in one exemplary set-up.
Figures 2a-2b provide partial schematic illustration of a fuel element in (a) in perspective view (b) cross-sectional view in one exemplary set-up.
Figure 3 provides partial schematic illustration of a fuel element in an alternative illustrative set-up.
Figure 4 provides a schematic illustration of interatomic diffusion among the different components of a fuel element in one exemplary set-up.
Figures 5a-5b illustrate schematics of a fuel assembly with a separator 51 between a first fuel element 52 and second fuel element 53 in one exemplary set-up; (a) shows that all of the components are in contact with one another; (b) shows that the components are not in contact with one another (for illustration purpose).
Figures 6a and 6b-6e, respectively, provide a flow chart of a process of making a fuel element and illustrative details of the process in one exemplary set-up.
Figure 7 provides a flow chart of a process of making a nuclear fuel in one exemplary set-up.
Figure 8 provides a flow chart of a process of making a nuclear fuel in one alternative illustrative set-up.
Figures 9a and 9b-9e, respectively, provide a flow chart of a process of using a fuel assembly and illustrative details of the process in one exemplary set-up.

### DETAILED DESCRIPTION

### Introduction

In the following detailed description, reference is made to the accompanying drawings, which form a part hereof. In the drawings, the use of similar or the same symbols in different drawings typically indicates similar or identical items, unless context dictates otherwise.

The illustrative embodiments described in the detailed description, drawings, and claims are not meant to be limiting. Other embodiments may be utilized, and other changes may be made, without departing from the scope of the subject matter presented here.

One skilled in the art will recognize that the herein described components (e.g., operations), devices, objects, and the discussion accompanying them are used as examples for the sake of conceptual clarity and that various configuration modifications are contemplated. Consequently, as used herein, the specific exemplars set forth and the accompanying discussion are intended to be representative of their more general classes. In general, use of any specific exemplar is intended to be representative of its class, and the non-inclusion of specific components (e.g., operations), devices, and objects should not be taken as limiting.

The present application uses formal outline headings for clarity of presentation. However, it is to be understood that the outline headings are for presentation purposes, and that different types of subject matter may be discussed throughout the application (e.g., device(s)/structure(s) may be described under process(es)/operations heading(s) and/or process(es)/operations may be discussed under structure(s)/process(es) headings; and/or descriptions of single topics may span two or more topic headings). Hence, the use of the formal outline headings is not intended to be in any way limiting.

### Overview

The present invention consists in a nuclear fuel assembly according to claim 1, a method of making a nuclear fuel assembly according to claim 11, and a method of using a nuclear fuel assembly according to claim 14.

### Fuel Assembly

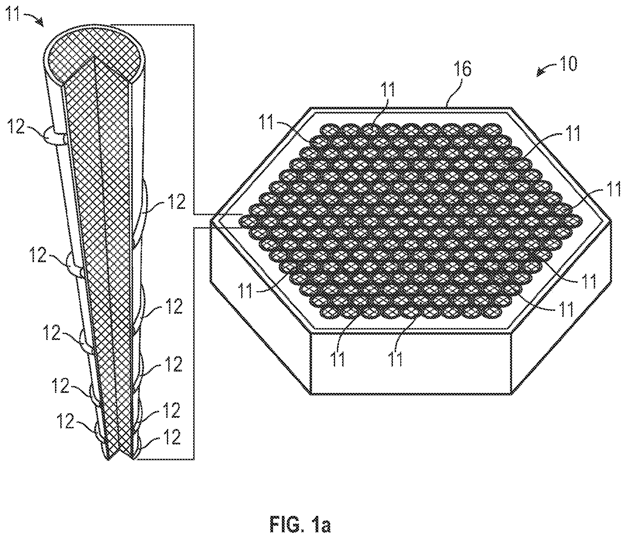

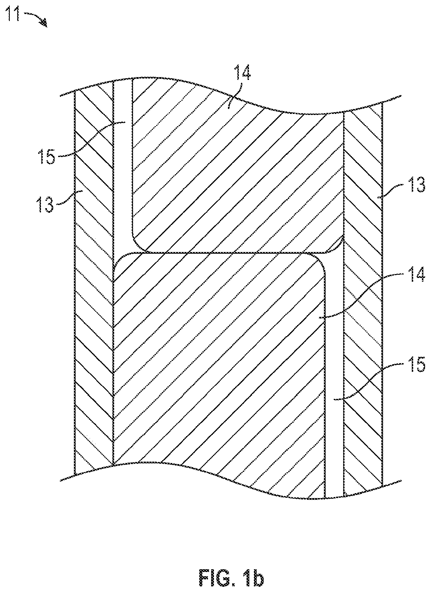

Figure 1a provides a partial illustration of a nuclear fuel assembly 10. The fuel assembly may be a fissile nuclear fuel assembly or a fertile nuclear fuel assembly. The assembly may include fuel elements (or "fuel rods" or "fuel pins") 11. Figure 1b provides a partial illustration of a fuel element 11. As shown, the fuel element may include a cladding material 13, a fuel 14, and, in some instances, at least one gap 15.

A fuel may be sealed within a cavity by the exterior cladding material 13. In some instances, the multiple fuel materials may be stacked axially as shown in Figure 1(b), but this need not be the case. For example, a fuel element may contain only one fuel material. In one set-up, gap(s) 15 may be present between the fuel material and the cladding material, though gap(s) need not be present. In one set-up, the gap is filled with a pressurized atmosphere, such as a pressured helium atmosphere. In an additional example, the gap may be filled with sodium.

A fuel may contain any fissionable material. A fissionable material may contain a metal and/or metal alloy. In one set-up, the fuel may be a metal fuel. It can be appreciated that metal fuel may offer relatively high heavy metal loadings and excellent neutron economy, which is desirable for breed-and-burn process of a nuclear fission reactor. Depending on the application, fuel may include at least one clement chosen from U, Th, Am, Np, and Pu. The term "element" as represented by a chemical symbol herein may refer to one that is found in the Periodic Table -this is not to be confused with the "element" of a "fuel element". In one set-up, the fuel may include at least about 90 wt% U - e.g., at least 95 wt %, 98 wt %, 99 wt %, 99.5 wt %, 99.9 wt%, 99.99 wt%, or higher of U. The fuel may further include a refractory material, which may include at least one element chosen from Nb, Mo, Ta, W, Re, Zr, V, Ti, Cr, Ru, Rh, Os, Ir, and Hf. In one set-up, the fuel may include additional burnable poisons, such as boron, gadolinium, or indium.

In one set-up, the metal fuel may be alloyed with about 3 wt% to about 10 wt% zirconium to dimensionally stabilize the alloy during irradiation and to inhibit low-temperature eutectic and corrosion damage of the cladding. A sodium thermal bond fills the gap that exists between the alloy fuel and the inner wall of the clad tube to allow for fuel swelling and to provide efficient heat transfer, which may keep the fuel temperatures low. In one set-up, individual fuel elements 11 may have a thin wire 12 from about 0.8 mm diameter to about 1.6 mm diameter helically wrapped around the circumference of the clad tubing to provide coolant space and mechanical separation of individual fuel elements 56 within the housing of the fuel assemblies 18 and 20 (that also serve as the coolant duct). In one set-up, the cladding 13, and/or wire wrap 12 may be fabricated from ferritic-martensitic steel because of its irradiation performance as indicated by a body of empirical data.

### Fuel Element

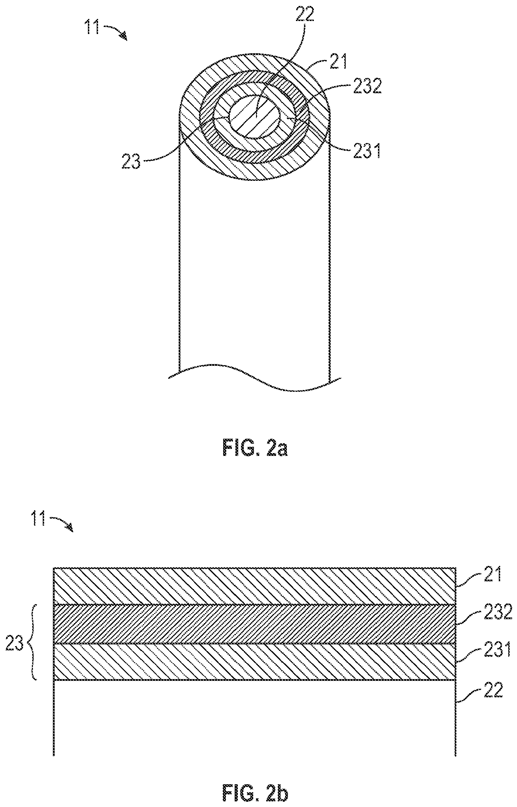

A "fuel element", such as element 10 shown in Figures 1a-1b, in a fuel assembly of a power generating reactor may generally take the form of a cylindrical rod. The fuel element may be a part of a power generating reactor, which is a part of a nuclear power plant. Depending on the application, the fuel element may have any suitable dimensions with respect to the length and diameter. Figures 2a-2b provide different views of schematic illustrations of a fuel element. The fuel element may include a cladding layer 21, a fuel 22 disposed interior to the cladding layer. In the case of a nuclear reactor, the fuel may contain (or be) a nuclear fuel. According to the invention, the nuclear fuel is an annular nuclear fuel. Referring to Figures 2a-2b, in one set-up, the fuel element may include a liner 23 disposed between the nuclear fuel 22 and the cladding layer 21. The liner may contain multiple layers (e.g., 231 and 232).

The fuel may have any geometry. According to the invention, the fuel has an annular geometry. In such an embodiment, a fuel in an annular form may allow a desirable level of fuel density to be achieved after a certain level of burn-up. Also, such an annular configuration may maintain compressive forces between the fuel and the cladding to promote thermal transport. The fuel may be tailored to have various properties, depending on the application. For example, the fuel may have any level of density. In one set-up, it is desirable to have a high density of fuel, such as one as close to theoretical density uranium (in the case of a fuel containing uranium) as possible. In one set-up, having a low level porosity may prevent formation of internal voids during irradiation.

The cladding material for the cladding layer may include any suitable material, depending on the application. In one set-up, the cladding layer may include at least one material chosen from a metal, a metal alloy, and a ceramic. In one set-up, the cladding may contain a refractory material, such as a refractory metal including at least one element chosen from Nb, Mo, Ta, W, Re, Zr, V, Ti, Cr, Ru, Rh, Os, Ir, Nd, and Hf.

According to the invention, the metal alloy in the cladding layer is steel. The steel may be chosen from a martensitic steel, an austenitic steel, a ferritic steel, an oxide-dispersed steel, T91 steel, T92 steel, HT9 steel, 316 steel, and 304 steel. The steel may have any type of microstructure. For example, the steel may include at least one of a martensite phase, a ferrite phase, and an austenite phase. In one embodiment, substantially all of the steel has at least one phase chosen from a martensite phase, a ferrite phase, and an austenite phase.

In some cases, particularly at high burn-ups, the elements of the fuel and the cladding may tend to diffuse, thereby causing un-desirable alloying and thus degrading the material of the fuel and the cladding (e.g., by de-alloying of the fuel and/or cladding layer or forming a new alloy with degraded mechanical properties). A liner may serve as a barrier layer between the fuel and the cladding material to mitigate such interatomic diffusion of the elements. For example, a liner may be employed to mitigate interatomic diffusion between the elements of the fuel and the cladding material to avoid, for example, degradation of the fuel and/or cladding material by foreign (and sometimes undesirable) elements. The liner may contain one layer or multiple layers - e.g., at least 2, 3, 4, 5, 6, or more layers. In the case where the liner contains multiple layers, these layers may contain the same or different materials and/or have the same or different properties. For example, in one set-up, at least some of the layers may include the same material while some include different materials.

According to the invention, the liner includes a first region disposed adjacent the fuel and a second region disposed adjacent the cladding material. The region in one set-up may be a layer or a portion of a layer partially covering an underlying material. Referring to Figures 2a-2b, according to the invention, liner 23 includes two layers 231 and 232. A first region of the liner may be disposed in a first layer 231 and a second region of the liner may be disposed in a second layer 232. The first region includes a first material and the second region includes a second material. The first material is different from the second material. Additional region(s) and/or layers, including one (or more) between the first and second regions, may also be employed.

The first layer 231 and second layer 232 may each have a thickness; the thickness values may be the same as or different from each other. In one set-up, the first layer 231 may have a thickness of at least about 20 microns - e.g., at least 30 microns, 40 microns, 60 microns, 80 microns, 100 microns, or larger. The second layer 232 may have a thickness of about 10 microns e.g., at least 20 microns, 40 microns, 60 microns, 80 microns, 100 microns, or larger. Larger or smaller values are possible. The thickness of the first layer 231 and second layer 232 may be the same or different The first layer 564 may be thicker or thinner than the second layer 232, or they may have the same thickness.

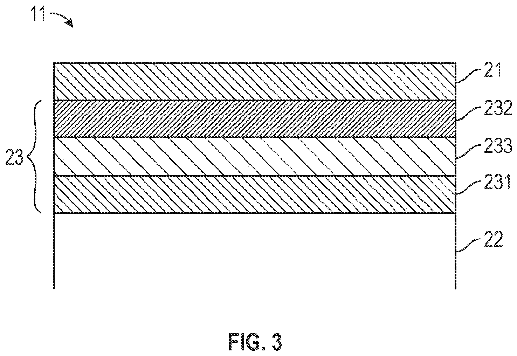

Referring to Figure 3, in one set-up, the liner 23 of the fuel element 11 may include an additional transition layer 233 disposed between the first layer 231 and the second layer 232. The transition layer 233 may include at least one of metal, alloy, ceramic, and polymer. In one embodiment, the transition layer may include an epoxy or polymer. The transition layer may be thinner relative to the first and/or second layer. In one set-up, the transition layer may have a thickness of less than or equal to about 1 to about 10 microns - e.g., about 2 to about 5 microns, about 3 to about 4 microns.

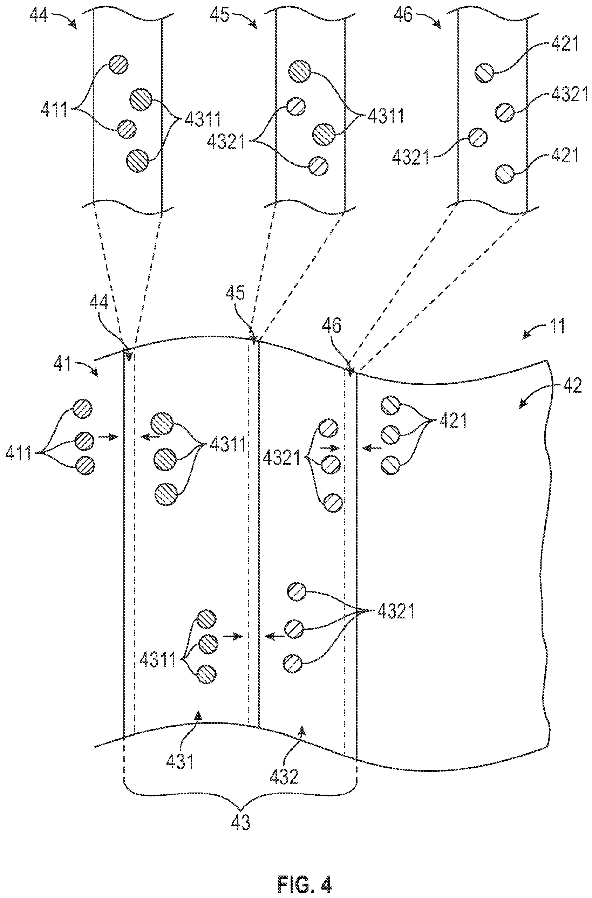

The respective material of the region (of the layer) may be chosen to have certain properties. For example, the first material (in the case that the first region is adjacent the fuel) may be chosen such that they are adapted to mitigate interatomic diffusion between the first material and the nuclear fuel. Referring to Figure 4, the atoms 411 of the nuclear fuel 41 and the atoms 421 of the cladding layer 42 may tend to diffuse outwards (see arrows). Similarly, the atoms 4311 of the first layer 431 and the atoms 4321 of the second layer 432 (of the liner 43) may tend to diffuse outwards (see arrows).

As a result of the mitigation in this set-up, very little, if any, compound may be formed with elements from the first layer and the fuel. Thus, region 44, which contains atoms 411 and 4311 in Figure 4 may not exist, if at all; and if it exists, the thickness thereof would be very small, such as smaller than or equal to 20% - e.g., smaller than or equal to 10%, 5%, 2%, 1%, 0.5 %, or smaller, of the thickness of the nuclear fuel and/or layer. In another set-up, the first material and the second material may be chosen such that they are adapted to mitigate interatomic diffusion between the first layer 431 and second layer 432. Thus, region 45, which contains atoms 4311 and 4321 in Figure 4 may not exist, if at all; and if it exists, the thickness thereof would be very small, such as the aforementioned range of region 44. In another set-up, the second material may be chosen such that they are adapted to mitigate interatomic diffusion between the second layer 432 and the cladding layer 42. Thus, region 46, which contains atoms 4321 and 421 in Figure 4 may not exist, if at all; and if it exists, the thickness thereof would be very small, such as the aforementioned range of region 44.

Mitigation herein may refer to reduction and/or prevention but need not refer to total elimination. In one set-up, mitigation of interatomic diffusion may refer to prevention of such diffusion to an extent that minimal (or even no) diffusion may be observed. One result of such mitigation is minimal formation of a compound containing elements diffused from different components (generally) observed at the interface between the components. Although in some cases mitigation may describe a lack of presence of foreign elements, in some other instances mitigation may encompass a minimal presence of foreign elements in the material resulting from diffusion from another component (of the fuel element). Accordingly, in one set-up, mitigation of interatomic diffusion herein may refer to having no significant amount of foreign elements. Thus, as shown in Figure 4 in one embodiment, the first layer 431 is substantially free of atoms of elements diffused from the cladding 42 and a second layer 432 is substantially free of atoms of elements diffused from the fuel 42. In one set-up, the fuel element is substantially free of sodium between the fuel 41 and the cladding layer 42.

The fuel elements described herein allow mitigation of interatomic diffusion among the different components of the fuel clement. As shown in Figure 4, in one set-up, wherein at least one of (i) the first material in the first layer 431 and the second material in the second layer 432; (ii) the first material (in the first layer 431) and the nuclear fuel 41; and (iii) the second material (in the second layer 432) and the cladding layer 42 is substantially free of interatomic diffusion therebetween. In one set-up, at least one of (i) the fuel 41 and the first layer 431 and (ii) the cladding layer 42 and the second layer 432 is substantially free of interatomic diffusion therebetween. The fuel elements described herein may exhibit substantially free of interatomic diffusion at a wide range of temperatures. For example, it may be observed at a temperature of greater than or equal to room temperature - e.g., at least 50 °C, 95 °C, 100 °C, 150 °C, 200 °C, 250 °C, 300 °C, 350 °C, 400 °C, 450 °C, 500 °C, 550 °C, 600 °C, 650 °C, 700 °C, 750 °C, 800 °C or higher.

The first material in the first layer 431 and the second material in the second layer 432 (or more in the case that additional materials are present) may each have its own material properties, such as chemical properties, thermal properties, and the like. For example, the material may be selected because it is inert with respect to the component adjacent to it (fuel or cladding). For example, any of these materials may include at least one refractory material. A refractory material may include a refractory metal or alloy, which includes a material having at least one element chosen from Nb, Mo, Ta, W, Re, Zr, V, Ti, Cr, Ru, Rh, Os, Ir, Nd, and Hf. In one set-up, the first material includes the at least one element chosen from V and Cr. In one set-up, the first material includes V. In another setup, the second includes the element Zr.

In at least one set-up, the fuel elements described need not contain sodium therein. Several pre-existing techniques employ Na in the fuel element to form a molten layer between the fuel and cladding to provide thermal contact between the fuel and cladding. However, sodium in these pre-existing techniques may parasitically absorb neutrons or scatter neutrons. The fuel elements described herein include the liner, which is in contact with both the cladding and the fuel, and thus need not contain sodium to promote such contact. Although sodium is not needed, sodium may still be employed in some set-ups of the fuel elements described herein.

At least some of the components of the fuel elements may be bonded. The bonding may be physical (e.g., mechanical) or chemical. In one embodiment, the nuclear fuel, the liner, and the cladding are mechanically bonded. In one embodiment, the first layer and the second layer are mechanically bonded. The bonding techniques are described further below.

### Fuel Element Separator

The fuel elements described herein may additionally contain at least one separator between the nuclear fuels. For example, provided in one set-up is a fuel element, the fuel element comprising: first and second nuclear fuels, each of the first and second nuclear fuels having a first end and a second end; and a cladding layer disposed exterior to at least one of the first and second nuclear fuels; and a separator disposed between a first end of one of the first and second nuclear fuels and a second end of the other of the first and second nuclear fuels. The separator may include a first region contacting the first end of one of the first and second fuel elements and a second region contacting the second end of the other of the first and second fuel elements. The fuel element may be any of those descried herein. In this one set-up, a separator may be disposed between a first end of one of the first and second fuel elements and a second end of the other of the first and second fuel elements.

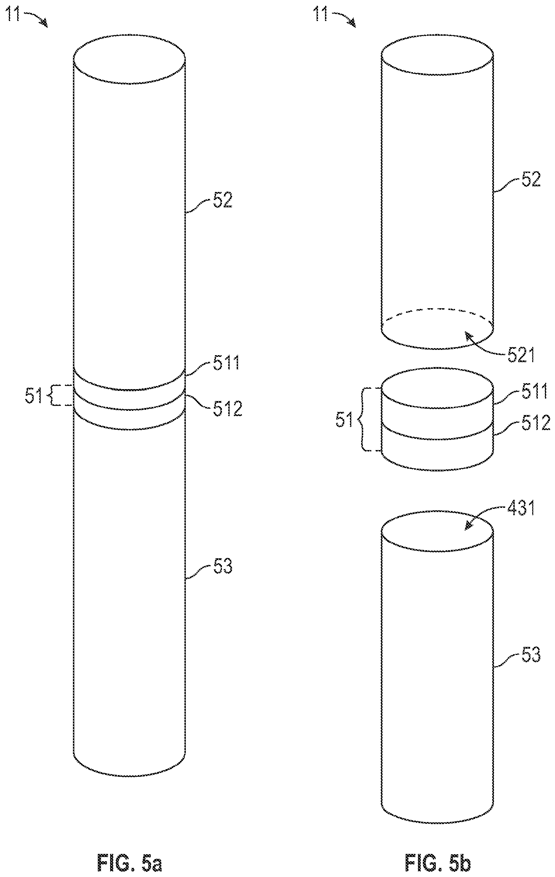

Referring to Figure 5, the separator 51 may have any configuration and composition. For example, the separator may be configured to be similar to the liner described herein. In other words, in the case wherein the different fuels 52 and 53 are arranged axially, the separator 51 may be adapted to mitigate expansion of the nuclear fuel in an axial direction. Figures 5a-5b illustrate schematics of a fuel element with a separator 51 between a first fuel 52 and second fuel 53. Figure 5a shows all of the components when they are in contact with one another and Figure 5b shows them not in contact (for illustration purpose). In this set-up, the separator 51 may include a first region (e.g., in a first layer 511) contacting the first end 521 of one of the first and second fuel elements - in this example, it is the first fuel element 52. The separator 51 may include a second region (e.g., in a first layer 512) contacting the second end 431 of the other of the first and second fuel elements - in this example, it is the second fuel element 53. In one set-up, the separate 51 is adapted to mitigate interatomic diffusion between the nuclear fuel and the cladding layer at at least one of the first end 521 of the first nuclear fuel 52 or the second end of the second nuclear fuel 53. More than a separator may be used, just as more than two fuels may be present in the fuel element. In one set-up, the fuel element may have a second (or more) additional separator(s) disposed proximally over a bottom surface of the cylindrical fuel element. This additional separator may serve as an end cap of the fuel element.

Similar to the liner described herein, the separator may include at least a first separator layer 511 including the first region and a second layer 512 including the second region. In one set-up, the first region of the separator may include at least one material chosen from Nb, Mo, Ta, W, Re, Zr, V, Ti, Cr, Ru, Rh, Os, Ir, Nd, and Hf. In another set-up, the second region of the separator may include at least one material chosen from Nb, Mo, Ta, W, Re, Zr, V, Ti, Cr, Ru, Rh, Os, Ir, Nd, and Hf.

### Methods of Makig/Using the Fuel Element

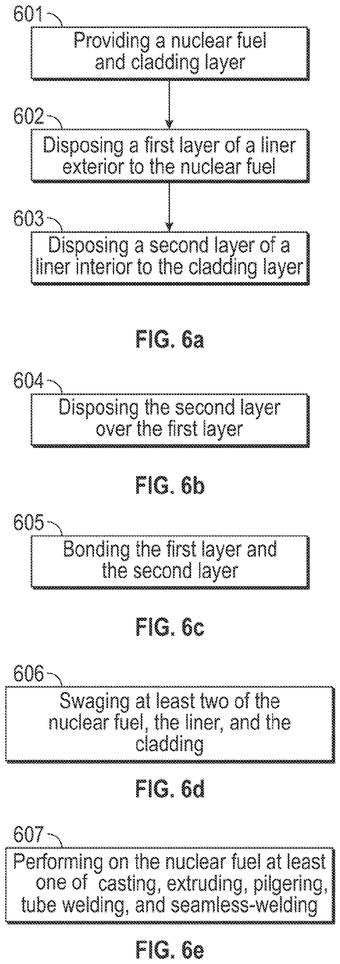

The fuel element, and an fuel assembly including the fuel element, described herein may be manufactured by a variety of techniques. Referring to Figure 6a, provided in one example is a method of making an article, which may be a fuel element. The method may include providing a nuclear fuel and a cladding layer (step 601); disposing a first layer of a liner exterior an annular nuclear fuel, the first layer contacting the annular nuclear fuel (step 602); and disposing a second layer of the liner interior to the cladding layer, the second layer contacting the cladding (step 603). In one example, the second layer may be disposed over the first layer. Disposing may involve plating (e.g., electroplating), vapor deposition (e.g., chemical or physical vapor deposition), or other suitable methods. For example, electrochemical coating may be employed.

For example, a liner (which may be any of those described herein) may be disposed over to the fuel, such as exterior to the fuel. In another example, a first layer of the liner may be disposed over the fuel and a second layer of the liner may be disposed over the cladding. The first layer and the second layer in this example may subsequently be joined together, by, for example, bonding by heating. Other alternative orders of steps of forming the different components of the fuel element may also be employed, depending on the application.

Additional processing may be employed. Referring to Figure 6b, the process may further comprise disposing a second layer over the first layer of the liner (step 604). Referring to Figure 6c, the process may further comprise bonding the first layer and the second layer (step 605) of the liner. In one example, the first and second layers of the liner, as well as the other components of the fuel element, may be bonded, as described above. The bonding may be chemical or physical bonding. An example of physical bonding may be mechanical bonding. In one example, mechanical bonding may include swaging. Referring to Figure 6d, swaging may be conducted for at least two of the annular fuel, the liner, and the cladding (step 606). In one example, swaging is applied to all of these components of a fuel element. In one example, the fuel, such as an annular fuel, may be coated by a liner by deposition, such as vapor deposition (physical or chemical vapor deposition), with a cladding swaged thereover. Referring to Figure 6e, in one example the method may further comprise performing on the annular nuclear fuel at least one process chosen from casting, extruding, pilgering, tube welding, and seamless-welding (step 607). In one example, the layers of the liners may be coextruded over the fuel. In another embodiment, the liner(s) and/or fuel may be slid into the cavity of the cladding to create contact and to make a fuel element.

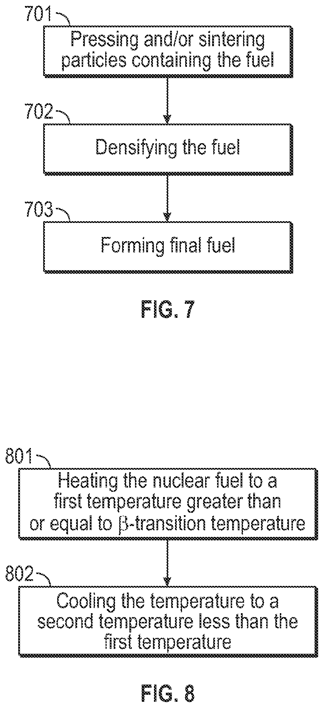

The method may further comprise a method of making the fuel. Referring to Figure 7, the fuel may be formed by pressing and/or sintering particles containing the fuel (which may be any of those described herein) into a desired shape (step 701) - e.g., a rod. The fuel may be additionally densified (step 702) to avoid internal voids and to increase the density to close to theoretical density of the fuel. After a rod-shape fuel is formed, the rod may be cast into a mold to form a final product (step 703). In this example that involves casting, pressing and sintering need not be employed. The process of making the fuel may further involve at least one process chosen from casting, extruding, pilgering, tube welding, and seamless-welding. For example, in one example, casting of the fuel may be employed directly within the fuel element internal to the liner and/or cladding.

In one example, by changing the processing parameter, the microstructure, and thus the material properties, of the components of the fuel elements may be tailored. The processing parameter may refer to temperature, pressure, etc. Referring to Figure 8, the methods of making a fuel element described herein may further comprise heating the nuclear fuel to a first temperature of at least a beta-transition temperature of the nuclear fuel (step 801); and cooling the annular nuclear fuel to a second temperature that is lower than the first temperature (step 802). The cooling from the beta-transition temperature may be sufficiently fast such that such cooling is considered a beta-quenching. In one example, because the gamma transition temperature is higher than the beta-transition temperature, the temperature to which the fuel is heated may include (or even exceed) gamma-transition temperature. The temperature variation and the rates thereof may be carried out, for example, under a condition that promotes formation of equiaxed grains. In one example, the employment of beta-quenching may minimize formation of a preferred orientation in the grain and instead may promote grain isotropy, including at least radial isotropy. In one example wherein the fuel contains grain preferred orientation after extrusion, subjecting the fuel to beta-quenching may minimize such preferred orientation and instead promote isotropy - e.g., uniform distribution of crystal phases.

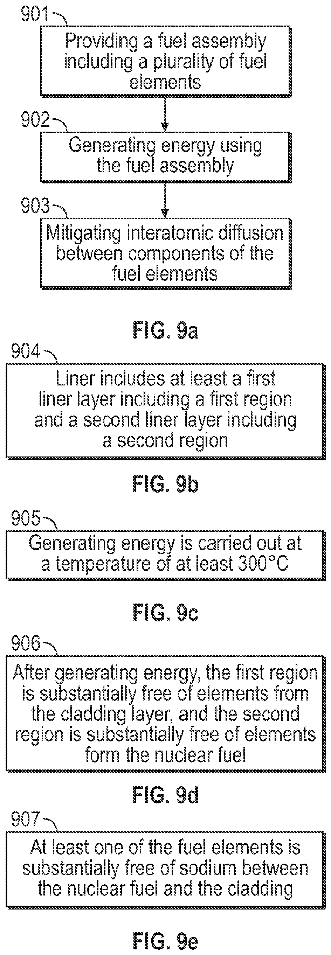

The fuel element, and a fuel assembly including the fuel element, described herein may be employed in a variety of applications. For example, referring to Figure 9a, provided in one example is a method of using a fuel assembly. The method may comprise providing a fuel assembly comprising a plurality of fuel elements (step 901); the fuel elements may be any of the fuel elements described herein and cladding disposed exterior to the liner. The fuel assembly may be used to generate energy (step 902). The fuel assembly may be used to mitigate interatomic diffusion (step 903) between at least one of (i) the first material and the second material; (ii) the first material and the nuclear fuel; and (iii) the second material and the cladding layer. Referring to Figure 9b, the liner may include at least a first liner layer including a first region and a second liner layer including a second region (as a part of step 904). In one example, the liner may include a first region disposed adjacent the nuclear fuel and including a first material, and a second region disposed adjacent the cladding layer and including a second material that is different from the first material.

Depending on the application, the conditions in the steps involved in the methods may vary. For example, referring to Figure 9c, the generation of energy may be carried out at a temperature of at least 300 °C (step 905) - e.g., at least 350 °C, at least 400 °C, at least 450 °C, at least 500 °C, or more. Referring to Figure 9d, as a result of the mitigating ability of the liner of the fuel element described herein, in one example after generating energy, the first region of the fuel is substantially free of elements from the cladding material, and the second region is substantially free of elements from the annular nuclear fuel (step 906). Referring to Figure 9e, in one example, the fuel is substantially free of sodium between the annular fuel and the cladding (as a part of step 907).

### Power Generation

As described above, the fuel assemblies described herein may be a part of a power or energy generator, which may be a part of a power generating plant. The fuel assembly may be a nuclear fuel assembly. In one example, the fuel assembly may include a fuel, a plurality of fuel elements, and a plurality of fuel ducts, such as those described above. The fuel ducts may include the plurality of fuel elements disposed therein.

At least some of fuel assemblies described herein may include interstitial spaces among the plurality of the fuel ducts. The interstitial spaces may be defined as the space between the plurality of the fuel ducts. At least one of a coolant, inert gas, fuel material, and a monitoring device can be disposed in at least some of these interstitial spaces. The interstitial spaces may be empty or may include certain materials. For example, in the interstitial spaces may be at least one of a coolant, inert gas, and fuel material. The coolant and/or fuel material may be any of those described above. An inert gas may be any of those known in the art - e.g., nitrogen, a noble gas (e.g., argon, helium, etc). In some examples, the interstitial spaces may include an instrument, such as any of those described above that may be present in the interior of the first hollow structure or the space between the first and second hollow structure. In one example, the instrument is a monitoring device monitoring the operation conditions of the fuel assembly.

The fuel assembly described herein may be adapted to produce a peak areal power density of at least about 50 MW/m² - e.g., at least about 60 MW/m², about 70 MW/m², about 80 MW/m², about 90 MW/m², about 100 MW/m², or higher. In some examples, the fuel assembly may be subjected to radiation damage at a level of at least about 120 displacements per atom ("DPA") - e.g., at least about 150 DPA, about 160 DPA, about 180 DPA, about 200 DPA, or higher.

With respect to the use of substantially any plural and/or singular terms herein, those having skill in the art can translate from the plural to the singular and/or from the singular to the plural as is appropriate to the context and/or application. The various singular/plural permutations are not expressly set forth herein for sake of clarity.

The herein described subject matter sometimes illustrates different components contained within, or connected with, different other components. It is to be understood that such depicted architectures are merely exemplary, and that in fact many other architectures may be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality, and any two components capable of being so associated can also be viewed as being "operably couplable," to each other to achieve the desired functionality. Specific examples of operably couplable include but are not limited to physically mateable and/or physically interacting components, and/or wirelessly interactable, and/or wirelessly interacting components, and/or logically interacting, and/or logically interactable components.

In some instances, one or more components may be referred to herein as "configured to," "configured by," "configurable to," "operable/operative to," "adapted/adaptable," "able to," "conformable/conformed to," etc. Those skilled in the art will recognize that such terms (e.g. "configured to") can generally encompass active-state components and/or inactive-state components and/or standby-state components, unless context requires otherwise.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the scope of the subject matter described herein. It will be understood by those within the art that, in general, terms used herein, and especially in the appended claims (e.g., bodies of the appended claims) are generally intended as "open" terms (e.g., the term "including" should be interpreted as "including but not limited to," the term "having" should be interpreted as "having at least," the term "includes" should be interpreted as "includes but is not limited to," etc.). It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to claims containing only one such recitation, even when the same claim includes the introductory phrases "one or more" or "at least one" and indefinite articles such as "a" or "an" (e.g., "a" and/or "an" should typically be interpreted to mean "at least one" or "one or more"); the same holds true for the use of definite articles used to introduce claim recitations. In addition, even if a specific number of an introduced claim recitation *is* explicitly recited, those skilled in the art will recognize that such recitation should typically be interpreted to mean *at least* the recited number (e.g., the bare recitation of "two recitations," without other modifiers, typically means *at least* two recitations, or *two or more* recitations). Furthermore, in those instances where a convention analogous to "at least one of A, B, and C, etc." is used, in general such a construction is intended in the sense one having skill in the art would understand the convention (e.g., " a system having at least one of A, B, and C" would include but not be limited to systems that have A alone, B alone, C alone, A and B together, A and C together, B and C together, and/or A, B, and C together, etc.). In those instances where a convention analogous to "at least one of A, B, or C, etc." is used, in general such a construction is intended in the sense one having skill in the art would understand the convention (e.g., " a system having at least one of A, B, or C" would include but not be limited to systems that have A alone, B alone, C alone, A and B together, A and C together, B and C together, and/or A, B, and C together, etc.). It will be further understood by those within the art that typically a disjunctive word and/or phrase presenting two or more alternative terms, whether in the description, claims, or drawings, should be understood to contemplate the possibilities of including one of the terms, either of the terms, or both terms unless context dictates otherwise. For example, the phrase "A or B" will be typically understood to include the possibilities of "A" or "B" or "A and B."

With respect to the appended claims, those skilled in the art will appreciate that recited operations therein may generally be performed in any order. Also, although various operational flows are presented in a sequence(s), it should be understood that the various operations may be performed in other orders than those which are illustrated, or may be performed concurrently. Examples of such alternate orderings may include overlapping, interleaved, interrupted, reordered, incremental, preparatory, supplemental, simultaneous, reverse, or other variant orderings, unless context dictates otherwise. Furthermore, terms like "responsive to," "related to," or other past-tense adjectives are generally not intended to exclude such variants, unless context dictates otherwise.

Those skilled in the art will appreciate that the foregoing specific exemplary processes and/or devices and/or technologies are representative of more general processes and/or devices and/or technologies taught elsewhere herein, such as in the claims filed herewith and/or elsewhere in the present application.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

Any portion of the processes described herein may be automated. The automation may be accomplished by involving at least one computer. The automation may be executed by program that is stored in at least one non-transitory computer readable medium. The medium may be, for example, a CD, DVD, USB, hard drive, etc. The selection and/or design of the fuel element structure, including the assembly, may also be optimized by using the computer and/or a software program.

The above-described embodiments of the invention can be implemented in any of numerous ways. For example, some embodiments may be implemented using hardware, software or a combination thereof. When any aspect of an embodiment is implemented at least in part in software, the software code can be executed on any suitable processor or collection of processors, whether provided in a single computer or distributed among multiple computers.

Also, the technology described herein may be embodied as a method, of which at least one example has been provided. The acts performed as part of the method may be ordered in any suitable way. Accordingly, embodiments may be constructed in which acts are performed in any order different from that illustrated, which may include performing some acts simultaneously, even though shown as sequential acts in illustrative embodiments.

All definitions, as defined and used herein, should be understood to control over dictionary definitions, and/or ordinary meanings of the defined terms.

The indefinite articles "a" and "an," as used herein in the specification and in the claims, unless clearly indicated to the contrary, should be understood to mean "at least one."

The phrase "and/or," as used herein in the specification and in the claims, should be understood to mean "either or both" of the elements so conjoined, i.e., elements that are conjunctively present in some cases and disjunctively present in other cases. Multiple elements listed with "and/or" should be construed in the same fashion, i.e., "one or more" of the elements so conjoined. Other elements may optionally be present other than the elements specifically identified by the "and/or" clause, whether related or unrelated to those elements specifically identified. Thus, as a non-limiting example, a reference to "A and/or B", when used in conjunction with open-ended language such as "including" can refer, in one embodiment, to A only (optionally including elements other than B); in another embodiment, to B only (optionally including elements other than A); in yet another embodiment, to both A and B (optionally including other elements); etc.

As used herein in the specification and in the claims, "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," or, when used in the claims, "consisting of," will refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of." "Consisting essentially of," when used in the claims, shall have its ordinary meaning as used in the field of patent law.

As used herein in the specification and in the claims, the phrase "at least one," in reference to a list of one or more elements, should be understood to mean at least one element selected from any one or more of the elements in the list of elements, but not necessarily including at least one of each and every element specifically listed within the list of elements and not excluding any combinations of elements in the list of elements. This definition also allows that elements may optionally be present other than the elements specifically identified within the list of elements to which the phrase "at least one" refers, whether related or unrelated to those elements specifically identified. Thus, as a non-limiting example, "at least one of A and B" (or, equivalently, "at least one of A or B," or, equivalently "at least one of A and/or B") can refer, in one embodiment, to at least one, optionally including more than one, A, with no B present (and optionally including elements other than B); in another embodiment, to at least one, optionally including more than one, B, with no A present (and optionally including elements other than A); in yet another embodiment, to at least one, optionally including more than one, A, and at least one, optionally including more than one, B (and optionally including other elements); etc.

Any ranges cited herein are inclusive. The terms "substantially" and "about" used throughout this Specification are used to describe and account for small fluctuations. For example, they can refer to less than or equal to ±5%, such as less than or equal to ±2%, such as less than or equal to ±1%, such as less than or equal to ±0.5%, such as less than or equal to ±0.2%, such as less than or equal to ±0.1%, such as less than or equal to ±0.05%.

In the claims, as well as in the specification above, all transitional phrases such as "including," "including," "carrying," "having," "containing," "involving," "holding," "composed of," and the like are to be understood to be open-ended, i.e., to mean including but not limited to. Only the transitional phrases "consisting of" and "consisting essentially of" shall be closed or semi-closed transitional phrases, respectively, as set forth in the United States Patent Office Manual of Patent Examining Procedures, Section 2111.03.

The claims should not be read as limited to the described order or elements unless stated to that effect. It should be understood that various changes in form and detail may be made by one of ordinary skill in the art without departing from the scope of the appended claims. All embodiments that come within the scope of the following claims are claimed

## Claims

1. A nuclear fuel assembly including a plurality of fuel elements, wherein each fuel element comprises:
a liner (23) disposed exterior to an annular nuclear fuel (22), the annular nuclear fuel comprising Uranium metal; and
a steel cladding layer (21) disposed exterior to the liner;
wherein the liner includes a first region (231) disposed adjacent the nuclear fuel and including a first material, and a second region (232) disposed adjacent the steel cladding layer and including a second material that is different from the first material, and
wherein the first material is adapted at high burn ups to mitigate interatomic diffusion between the first material and the annular nuclear fuel, the first material and the second material are adapted at high burn ups to mitigate interatomic diffusion between the first and second material, and the second material is adapted at high burn ups to mitigate interatomic diffusion between the second material and the steel cladding layer.

2. The fuel assembly of claim 1, wherein the nuclear fuel also includes at least one fuel chosen from Th, Am, Np, and Pu.

3. The fuel assembly of any one of the preceding claims, wherein the nuclear fuel includes at least one refractory material chosen from Nb, Mo, Ta, W, Re, Zr, V, Ti, Cr, Ru, Rh, Os, Ir, Nd, and Hf.

4. The fuel assembly of any one of the preceding claims, wherein the steel cladding layer includes steel of at least one phase chosen from a martensite phase, a ferrite phase, and an austenite phase.

5. The fuel assembly of any one of claims 1 to 3, wherein the steel cladding layer includes at least one of a martensitic steel, a ferritic steel, an austenitic steel, an oxide-dispersed steel, T91 steel, T92 steel, HT9 steel, 316 steel, and 304 steel.

6. The fuel assembly of any one of the preceding claims, wherein the nuclear fuel, the liner, and the steel cladding layer are mechanically bonded.

7. The fuel assembly of any one of the preceding claims, wherein the first region of the liner is disposed in a first layer and the second region of the liner is disposed in a second layer.

8. The fuel assembly of claim 7, wherein the first layer and the second layer are mechanically bonded.

9. The fuel assembly of claim 1, wherein at least one of the first material and the second material includes at least one material chosen from Nb, Mo, Ta, W, Re, Zr, V, Ti, Cr, Ru, Rh, Os, Ir, Nd, and Hf.

10. The fuel assembly of any one of the preceding claims, wherein the nuclear fuel includes at least 90 wt% of U.

11. A method of making a nuclear fuel assembly, comprising
providing a fuel assembly comprising a plurality of fuel elements,
wherein providing each fuel element comprises:
providing an annular nuclear fuel and a steel cladding layer exterior to the nuclear fuel, the annular nuclear fuel comprising Uranium metal;
disposing a first layer of a liner exterior to the nuclear fuel, the first layer contacting the nuclear fuel and including a first material; and
disposing a second layer of the liner interior to the steel cladding layer, the second layer contacting the steel cladding layer, wherein the second layer includes a second material that is different from the first material,
wherein the first material is adapted at high burn ups to mitigate interatomic diffusion between the first material and the annular nuclear fuel, the first material and the second material are adapted at high burn ups to mitigate interatomic diffusion between the first and second material, and the second material is adapted at high burn ups to mitigate interatomic diffusion between the second material and the steel cladding layer.

12. The method of claim 11, further comprising at least one of:
swaging at least two of the nuclear fuel, the liner, and the steel cladding layer;
performing on the nuclear fuel at least one process chosen from casting, extruding, pilgering, tube welding, and seamless-welding;
heating the nuclear fuel to a first temperature of at least a beta-transition temperature of the nuclear fuel and cooling the nuclear fuel to a second temperature that is lower than the first temperature under a condition that promotes formation of equiaxed grains;
bonding the first layer and the second layer.

13. The method of claim 11 or claim 12, wherein at least one of disposing the first layer and disposing the second layer includes at least one of vapor deposition and electrochemical coating.

14. A method of using a fuel assembly, the method comprising:
providing the fuel assembly of any one of claims 1-10;
generating energy using the fuel assembly; and
mitigating interatomic diffusion between at least one of (i) the first material and the second material; (ii) the first material and the nuclear fuel; and (iii) the second material and the steel cladding layer.

## Patentansprüche

1. Kernbrennstoffkassette mit mehreren Brennstoffelementen, wobei jedes Brennstoffelement Folgendes umfasst:
einen Liner (23), der auf der Außenseite eines ringförmigen Kernbrennstoffs (22) angeordnet ist, wobei der ringförmige Kernbrennstoff Uranmetall umfasst; und
eine Stahlhüllschicht (21), die auf der Außenseite des Liners angeordnet ist;
wobei der Liner einen ersten Bereich (231), der neben dem Kernbrennstoff angeordnet ist und ein erstes Material enthält, und einen zweiten Bereich (232), der neben der Stahlhüllschicht angeordnet ist und ein zweites Material, das von dem ersten Material verschieden ist, enthält, aufweist und
wobei das erste Material dafür ausgelegt ist, bei hohen Abbränden die interatomare Diffusion zwischen dem ersten Material und dem ringförmigen Kernbrennstoff abzuschwächen, das erste Material und das zweite Material dafür ausgelegt sind, bei hohen Abbränden die interatomare Diffusion zwischen dem ersten Material und dem zweiten Material abzuschwächen, und das zweite Material dafür ausgelegt ist, bei hohen Abbränden die interatomare Diffusion zwischen dem zweiten Material und der Stahlhüllschicht abzuschwächen.

2. Brennstoffkassette nach Anspruch 1, wobei der Kernbrennstoff außerdem mindestens einen aus Th, Am, Np und Pu ausgewählten Brennstoff enthält.

3. Brennstoffkassette nach einem der vorhergehenden Ansprüche, wobei der Kernbrennstoff mindestens ein aus Nb, Mo, Ta, W, Re, Zr, V, Ti, Cr, Ru, Rh, Os, Ir, Nd und Hf ausgewähltes feuerfestes Material enthält.

4. Brennstoffkassette nach einem der vorhergehenden Ansprüche, wobei die Stahlhüllschicht Stahl mindestens einer aus einer Martensit-Phase, einer Ferrit-Phase und einer Austenit-Phase ausgewählten Phase enthält.

5. Brennstoffkassette nach einem der Ansprüche 1 bis 3, wobei die Stahlhüllschicht einen martensitischen Stahl, einen ferritischen Stahl, einen austenitischen Stahl, einen Stahl mit Oxiddispersion, T91-Stahl, T92-Stahl, HT9-Stahl, 316-Stahl und/oder 304-Stahl enthält.

6. Brennstoffkassette nach einem der vorhergehenden Ansprüche, wobei der Kernbrennstoff, der Liner und die Stahlhüllschicht mechanisch verbunden sind.

7. Brennstoffkassette nach einem der vorhergehenden Ansprüche, wobei der erste Bereich des Liners in einer ersten Schicht angeordnet ist und der zweite Bereich des Liners in einer zweiten Schicht angeordnet ist.

8. Brennstoffkassette nach Anspruch 7, wobei die erste Schicht und die zweite Schicht mechanisch verbunden sind.

9. Brennstoffkassette nach Anspruch 1, wobei das erste Material und/oder das zweite Material mindestens ein aus Nb, Mo, Ta, W, Re, Zr, V, Ti, Cr, Ru, Rh, Os, Ir, Nd und Hf ausgewähltes Material enthalten/enthält.

10. Brennstoffkassette nach einem der vorhergehenden Ansprüche, wobei der Kernbrennstoff mindestens 90 Gew.-% U enthält.

11. Verfahren zur Herstellung einer Kernbrennstoffkassette, das Folgendes umfasst:
Bereitstellen einer Brennstoffkassette mit mehreren Brennstoffelementen,
wobei das Bereitstellen jedes Brennstoffelements Folgendes umfasst:
Bereitstellen eines ringförmigen Kernbrennstoffs und einer Stahlhüllschicht, die auf der Außenseite des Kernbrennstoffs angeordnet ist, wobei der ringförmige Kernbrennstoff Uranmetall umfasst;
Anordnen einer ersten Schicht eines Liners auf der Außenseite des Kernbrennstoffs, wobei die erste Schicht den Kernbrennstoff kontaktiert und ein erstes Material enthält; und
Anordnen einer zweiten Schicht des Liners auf der Innenseite der Stahlhüllschicht, wobei die zweite Schicht die Stahlhüllschicht kontaktiert, wobei die zweite Schicht ein zweites Material, das von dem ersten Material verschieden ist, enthält,
wobei das erste Material dafür ausgelegt ist, bei hohen Abbränden die interatomare Diffusion zwischen dem ersten Material und dem ringförmigen Kernbrennstoff abzuschwächen, das erste Material und das zweite Material dafür ausgelegt sind, bei hohen Abbränden die interatomare Diffusion zwischen dem ersten Material und dem zweiten Material abzuschwächen, und das zweite Material dafür ausgelegt ist, bei hohen Abbränden die interatomare Diffusion zwischen dem zweiten Material und der Stahlhüllschicht abzuschwächen.

12. Verfahren nach Anspruch 11, ferner umfassend mindestens eines der Folgenden:
Gesenkschmieden von mindestens zwei von dem Kernbrennstoff, dem Liner und der Stahlhüllschicht;
Durchführen mindestens eines Prozesses aus der Gruppe bestehend aus Gießen, Extrudieren, Pilgern, Rohrschweißen und Nahtlosschweißen an dem Kernbrennstoff;
Erhitzen des Kernnbrennstoffs auf eine erste Temperatur von mindestens einer Beta-Übergangstemperatur des Kernbrennstoffs und Abkühlen des Kernbrennstoffs auf eine unter der ersten Temperatur liegende zweite Temperatur unter einer Bedingung, die die Bildung von gleichachsigen Körnern fördert;
Verbinden der ersten Schicht und der zweiten Schicht.

13. Verfahren nach Anspruch 11 oder Anspruch 12, bei dem das Anordnen der ersten Schicht und/oder das Anordnen der zweiten Schicht Aufdampfen und/oder elektrochemisches Beschichten umfasst.

14. Verfahren zur Verwendung einer Brennstoffkassette, wobei das Verfahren Folgendes umfasst:
Bereitstellung der Brennstoffkassette nach einem der Ansprüche 1-10;
Erzeugung von Energie unter Verwendung der Brennstoffkassette; und
Abschwächen der interatomaren Diffusion zwischen
(i) dem ersten Material und dem zweiten Material;
(ii) dem ersten Material und dem Kernbrennstoff; und/oder (iii) dem zweiten Material und der Stahlhüllschicht.

## Revendications

1. Assemblage combustible nucléaire comprenant une pluralité d'éléments combustibles, dans lequel chaque élément combustible comprend :
une gaine (23) disposée à l'extérieur d'un combustible nucléaire annulaire (22), le combustible nucléaire annulaire comprenant de l'uranium métallique ; et
une couche de placage en acier (21) disposée à l'extérieur de la gaine ;
dans lequel la gaine comprend une première zone (231) disposée de façon contiguë au combustible nucléaire et comprenant un premier matériau et une seconde zone (232) disposée de façon contiguë à la couche de placage en acier et comprenant un second matériau qui est différent du premier matériau et
dans lequel le premier matériau est conçu, à des combustions massiques élevées, pour atténuer la diffusion interatomique entre le premier matériau et le combustible nucléaire annulaire, le premier matériau et le second matériau sont conçus , à des combustions massiques élevées, pour atténuer la diffusion interatomique entre les premier et second matériaux et le second matériau est conçu , à des combustions massiques élevées, pour atténuer la diffusion interatomique entre le second matériau et la couche de placage en acier.

2. Assemblage combustible selon la revendication 1, dans lequel le combustible nucléaire comprend également au moins un combustible choisi entre Th, Am, Np et Pu.

3. Assemblage combustible selon l'une quelconque des revendications précédentes, dans lequel le combustible nucléaire comprend au moins un matériau réfractaire choisi entre Nb, Mo, Ta, W, Re, Zr, V, Ti, Cr, Ru, Rh, Os, Ir, Nd et Hf.

4. Assemblage combustible selon l'une quelconque des revendications précédentes, dans lequel la couche de placage en acier comprend de l'acier constitué d'au moins une phase choisie entre une phase de martensite, une phase de ferrite et une phase d'austénite.

5. Assemblage combustible selon l'une quelconque des revendications 1 à 3, dans lequel la couche de placage en acier comprend au moins l'un d'un acier martensitique, d'un acier ferritique, d'un acier austénitique, d'un acier à oxyde dispersé, de l'acier T91, de l'acier T92, de l'acier HT9, de l'acier 316 et de l'acier 304.

6. Assemblage combustible selon l'une quelconque des revendications précédentes, dans lequel le combustible nucléaire, la gaine et la couche de placage en acier sont liés mécaniquement.

7. Assemblage combustible selon l'une quelconque des revendications précédentes, dans lequel la première zone de la gaine est disposée dans une première couche et la seconde zone de la gaine est disposée dans une seconde couche.

8. Assemblage combustible selon la revendication 7, dans lequel la première couche et la seconde couche sont liées mécaniquement.

9. Assemblage combustible selon la revendication 1, dans lequel au moins l'un du premier matériau et du second matériau comprend au moins un matériau choisi entre Nb, Mo, Ta, W, Re, Zr, V, Ti, Cr, Ru, Rh, Os, Ir, Nd et Hf.

10. Assemblage combustible selon l'une quelconque des revendications précédentes, dans lequel le combustible nucléaire comprend au moins 90 % en poids de U.

11. Procédé de fabrication d'un assemblage combustible nucléaire, comprenant
la fourniture d'un assemblage combustible comprenant une pluralité d'éléments combustibles,
dans lequel la fourniture de chaque élément combustible comprend :
la fourniture d'un combustible nucléaire annulaire et d'une couche de placage en acier à l'extérieur du combustible nucléaire, le combustible nucléaire annulaire comprenant de l'uranium métallique ;
la disposition d'une première couche d'une gaine à l'extérieur du combustible nucléaire, la première couche étant en contact avec le combustible nucléaire et comprenant un premier matériau ; et
la disposition d'une seconde couche de la gaine à l'intérieur de la couche de placage en acier, la seconde couche étant en contact avec la couche de placage en acier, dans lequel la seconde couche comprend un second matériau qui est différent du premier matériau,
dans lequel le premier matériau est conçu , à des combustions massiques élevées, pour atténuer la diffusion interatomique entre le premier matériau et le combustible nucléaire annulaire, le premier matériau et le second matériau sont conçus , à des combustions massiques élevées, pour atténuer la diffusion interatomique entre les premier et second matériaux et le second matériau est conçu , à des combustions massiques élevées, pour atténuer la diffusion interatomique entre le second matériau et la couche de placage en acier.

12. Procédé selon la revendication 11, comprenant en outre au moins l'un de :
la retreinte d'au moins deux du combustible nucléaire, de la gaine et de la couche de placage en acier ;
la mise en oeuvre sur le combustible nucléaire d'au moins un processus choisi entre un coulage, une extrusion, un laminage à pas de pèlerin, un soudage de tubes et un soudage sans soudure ;
le chauffage du combustible nucléaire à une première température supérieure ou égale à une température de transition bêta du combustible nucléaire et le refroidissement du combustible nucléaire à une seconde température qui est inférieure à la première température dans des conditions qui favorisent la formation de grains équiaxes ;
la liaison de la première couche et de la seconde couche.

13. Procédé selon la revendication 11 ou la revendication 12, dans lequel au moins l'une de la disposition de la première couche et de la disposition de la seconde couche comprend au moins l'un d'un dépôt en phase vapeur et d'un revêtement électrochimique.

14. Procédé d'utilisation d'un assemblage combustible, le procédé comprenant :
la fourniture de l'assemblage combustible selon l'une quelconque des revendications 1-10 ;
la production d'énergie à l'aide de l'assemblage combustible ; et
l'atténuation de la diffusion interatomique (i) du premier matériau et du second matériau ; et/ou (ii) du premier matériau et du combustible nucléaire ; et/ou (iii) du second matériau et de la couche de placage en acier.
